# EUROPEAN PATENT APPLICATION

(11) **EP 3 309 368 A1**
(43) Date of publication of application: **18.04.2018**
(21) Application number: 16193907.9
(22) Date of filing: 14.10.2016
(51) Int. Cl.: F02B 29/04, F02M 35/10, F02M 35/104, F28F 1/42

(54) **AIR INTAKE TRACT ARRANGEMENT FOR AN INTERNAL COMBUSTION ENGINE**

(71) Applicant: AVL List GmbH, 8020 Graz (AT)
(72) Inventor: KAWABE, Yota, Kawasaki-shi Kanagawa 213-0033 (JP)
(74) Representative: Babeluk, Michael

(57) **Abstract**

The invention relates to an air intake tract arrangement (2) for an internal combustion engine with at least one intake passage (4) and at least one charge air cooler (5), wherein the charge air cooler (5) comprises a cooling fin arrangement (8) with at least one cooling fin (9) extending at least partly into the intake passage (4). The charge air cooler (5) comprises at least one cooler casing (10) surrounding a cooling chamber (11), said cooling chamber (11) being separated from the intake passage (4) by a wall section (12), and the cooling fin arrangement (8) comprises a first region (13) extending into the intake passage (4) and a second region (14) extending into the cooling chamber (11), wherein the cooling fin arrangement (8) passes through the wall section (12). This air intake tract arrangement (2) enables improved cooling of the charge air in a simple way.

## Description

The invention relates to an air intake tract arrangement for an internal combustion engine with at least one intake passage and at least one charge air cooler, wherein the charge air cooler comprises a cooling fin arrangement with at least one cooling fin extending partly into the intake passage.

The documents JP 2014 051 907 A and JP H 11 324 686 A disclose charge air coolers being arranged in an intake manifold having cooling fins protruding into the intake passage of the cylinder head.

Water cooled plastic manifolds for combustion engines are disclosed in CN 205 101 152 U, US 8 286 615 B2, EP 2 443 330 B1, US 8 677 982 B2 or US 9 103 268 B2.

DE 10 2009 050 258 B3 describes an intake manifold arrangement of an internal combustion engine with charge air cooler arranged in the intake manifold. The cooling fluid charge air cooler has cooling fluid tanks at first and second opposite ends. At least one of the cooling fluid tanks at the first and forms at least a part of the intake manifold and is an integral component of the cooling fluid charge air cooler.

It is the object of the invention to improve the cooling of the charge air in a simple way.

This is achieved in accordance with the invention such a way that the charge air cooler comprises at least one casing surrounding a cooling chamber, said cooling chamber being separated from the intake passage by a wall section, and the cooling fin arrangement comprises a first region extending into the intake passage and a second region extending into the cooling chamber, wherein the cooling fin arrangement passes through the wall section.

The charge air cooler cane be located very close to the combustion chamber. In this way a very high potential to cool the charge air may be provided.

The charge air cooler, at least partly, may consist of plastic material, wherein preferably the cooler casing of the charge air cooler is made of plastic material. Plastic casing of the charge air cooler has the advantage of low weight and low production costs. The use of plastic material enables complex design with low expenditure.

According to a preferred embodiment of the invention the wall section of the intake passage is configured by the cooler casing.

Advantageously the fin arrangement comprises a first group of blade shaped fins being arranged - preferably at least partially - parallel to the air flow direction in the intake passage and spaced apart from one another by gaps. This configuration enables an efficient cooling of the charge air with minimal disturbances of the air flow. At least one fin may be shaped angular having a first flank being arranged in the first region of the fin arrangement and a second flank being arranged in the second region of the fin arrangement. Preferably at least one second flank, preferably each second flank, comprises at least one orifice. The second flanks are located in the cooling chamber and spaced from one another by gaps, wherein cooling chamber is separated by the second flanks and form cooling sections. Adjacent cooling sections are flow connected by the orifices of the second flanks.

According to an embodiment of the invention at least two cooling fins comprise first flanks with different flank lengths in air flow direction of the intake passage. Preferably the length of at least one peripheral first flank is larger than the length of at least one central first length. In this way the fin arrangement can be situated in a branch region of two diverting intake ducts branching off from a main intake duct, wherein the longer peripheral first flanks may extend into the diverting intake ducts, wherein preferably at least one peripheral fin comprises a first flank with an end region being shaped in the form of an arch. Therefore, the cooling fins can be located very close to the combustion chamber.

According to a favorable embodiment with increased cooling of the charge air, at least one cooling fin comprises a first flank with a first section and a second section, wherein the first section is arranged in the intake passage, preferably formed by an intake manifold, and wherein the second section is extending into an intake duct of a cylinder head being arranged downstream of the intake passage. The intake manifold can be made of plastic material. This enables low costs and weight and high design complexity.

According to an embodiment of the invention with high structural integrity and very high cooling potential the cooling fin arrangement at least partly is designed as a grid, preferably in the first section. In detail the grid may comprise a second group of cooling fins forming a right angle the first group of cooling fins, wherein a lattice of preferably rectangular flow channels is shaped by cooling fins of the first and second groups. On one hand, the grid offers a large cooling surface and increases the heat transport. On the other hand, the grid reinforces the fin arrangement and reduces vibration effects.

According to a further embodiment at least two cooling chambers of adjacent intake passages are flow connected by at least one fluid passage preferably by two cooling fluid passages, wherein preferably the fluid passages are shaped by a casing bridge of the cooler casing. The cooler casing of at least one cooling chamber may be covered by a lid, wherein preferably the lids of at least two adjacent cooling chambers are joined by a lid bridge. This design enables optimal cooling and compact packaging.

The invention will be explained below in closer detail by reference to the schematic drawings, wherein:
- Fig. 1: shows a combustion engine with an air intake tract arrangement in accordance with the invention in a sectional view,
- Fig. 2: shows an air intake tract arrangement in accordance with the invention in a first embodiment in a sectional view according to the line II-II in Fig. 1,
- Fig. 3: shows the air intake tract arrangement in accordance with the invention in a first embodiment in an oblique view.
- Fig. 4: shows a detail of the air intake tract arrangement in a sectional view according to the line IV-IV in Fig. 3,
- Fig. 4a: shows a cooling fin in a sectional view,
- Fig. 5: shows a detail of the air intake tract arrangement in a sectional view according to the line V-V in Fig. 4,
- Fig. 6: shows a cooling fin arrangement with removed lid in an oblique view according to the line VI-VI in Fig 4,
- Fig. 7: shows cooling fin arrangements with lids in an oblique view,
- Fig. 8: shows an air intake tract arrangement in accordance with the invention in a second embodiment in an oblique view,
- Fig. 9: shows the air intake tract arrangement in a sectional view according to the line IX-IX in Fig. 8 and
- Fig. 10: shows an air intake tract arrangement in accordance with the invention in a third embodiment in a sectional view.

Parts with the same function are provided in the embodiments with the same reference numerals.

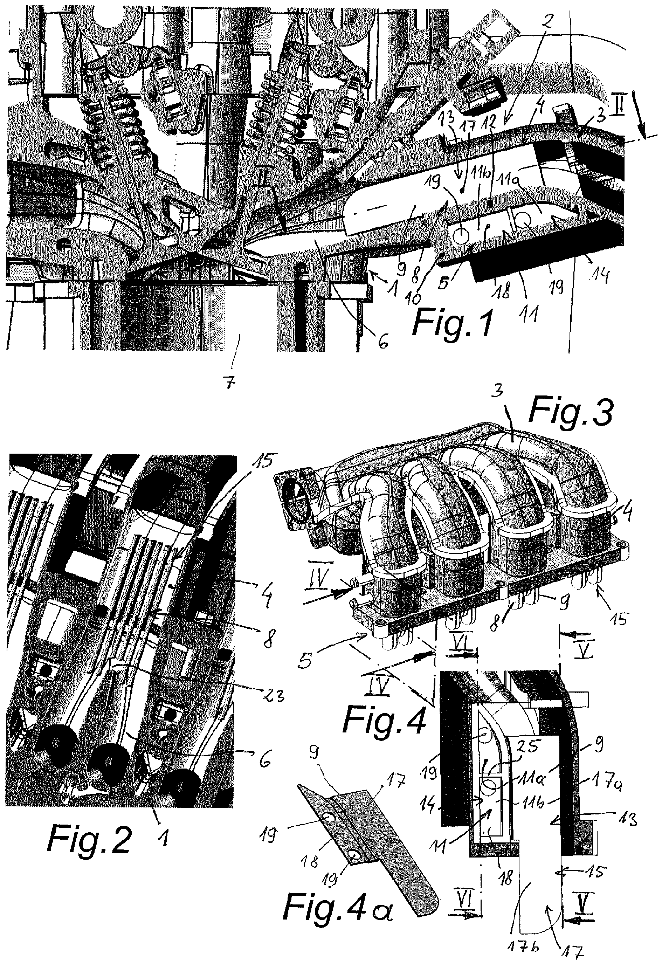

Figs. 1 and 2 show a cylinder head 1 of an internal combustion engine with an air intake tract arrangement 2. The air intake tract arrangement 2 comprises a plastic intake manifold 3 with at least one intake passage 4, wherein the intake manifold 3 is flanged to the cylinder head 1. Further the air intake tract arrangement 2 comprises at least one charge air cooler 5 and at least one intake port 6 per cylinder 7 formed in the cylinder head 1.

The charge air cooler 5 comprises a cooling fin arrangement 8 with a plurality of cooling fins 9, wherein the cooling fins 9 extend partly into the intake passage 4.

The charge air cooler 5 comprises at least one cooler casing 10 surrounding a cooling chamber 11, said cooling chamber 11 being separated from the intake passage 4 by a wall section 12, and the cooling fin arrangement 8 comprises a first region 13 extending into the intake passage 4 and a second region 14 extending into the cooling chamber 11, wherein the cooling fin arrangement 8 passes through the wall section 12. The wall section 12 is configured at least in part by the cooler casing 10.

The cooling fin arrangement 8 comprises a first group 15 of blade shaped cooling fins 9 which are arranged parallel to the air flow direction in the intake passage 4 and spaced apart from one another by gaps 20a. Each cooling fin 9 of the first group 15 has an angular shape with a first flank 17 and a second flank 18. The first flank 17 of each cooling fin 9 is arranged in the first region 13 of the cooling fin arrangement 8 and a second flank 18 is arranged in the second region 14 of the cooling fin arrangement 8. The first flank 17 comprises a first section 17a and a second section 17b. The first section 17a is arranged in the intake passage 4 and the second section 17b extends into an intake duct 6 of the cylinder head 1 arranged downstream of the intake passage 4.

Each second flank 18 comprises at least one orifice 19. The second flanks 18 are located in the cooling chamber 11 and spaced from one another by gaps 20b. The cooling chamber 11 is separated by the second flanks 18 into cooling sections 21. Adjacent cooling sections 21 are flow connected by the orifices 19 of the second flanks 18.

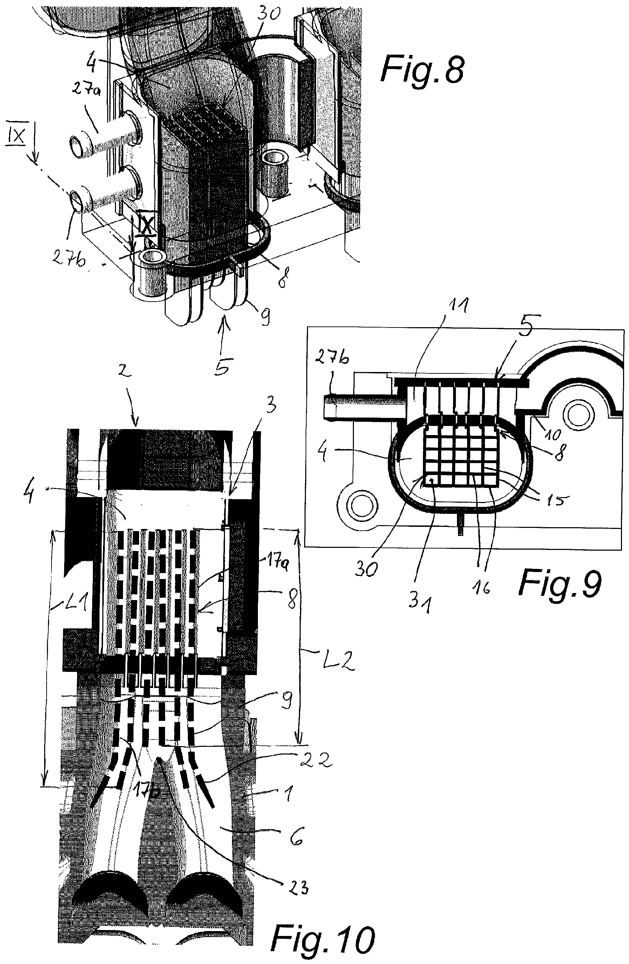

As best shown in Figs. 2, 5, 6, 7 or 8, the first group 15 of the cooling fin arrangement 8 comprise at least two fins 9 with different lengths L1, L2 of the first flanks 17 in air flow direction of the intake passage 4, wherein at least one peripheral first flank 17 is designed with larger length L1 than the length L2 of at least one central first flank 17. As illustrated in Fig. 10 the end region 22 of at least one peripheral cooling fin 9 may be shaped in the form of an arch. In this way the cooling fin arrangement 8 can be situated in a branch region 23 of two diverting intake ducts branching off from a main intake duct 6, wherein the longer peripheral first flanks 17 may extend into the diverting intake ducts 6. So the cooling fins 9 can be located very close to the cylinder 7.

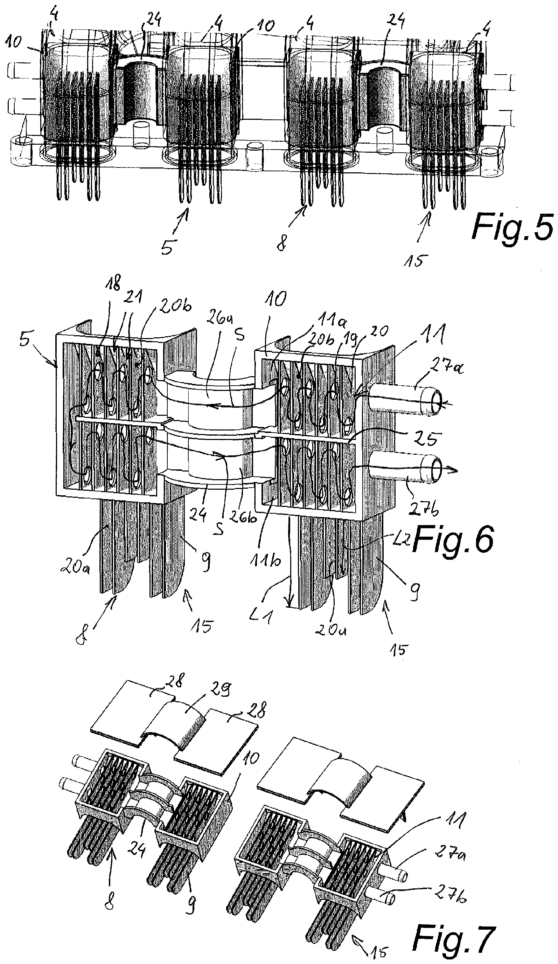

As illustrated in Figs. 5, 6 and 7 the casings 10 of adjacent intake passages 4 are connected by a casing bridge 24, wherein each casing bridge 24 forms two fluid passages between adjacent cooling chambers 11. Each cooling chamber 11 is separated into two sub chambers 11a, 11b by a dividing wall 25 (Fig. 6).

With reference to Fig. 6, cooling fluid is introduced to the first sub chamber 11a of the right cooling chamber 11 via feed stub 27a and meanders as indicated by arrow S through the gaps 20b and orifices 19. The cooling flow leaves the first sub chamber 11a of the right cooling chamber 11 and enters the first sub chamber 11a of the left cooling chamber 11 by a first fluid passage 26a shaped by the casing bridge 24. After meandering the first sub chamber 11a of the cooling chamber 11 the fluid enters the second sub chamber 11b of the left cooling chamber 11 and passes the second fluid passage 26b of the casing bridge 24. After that the fluid passes through the second sub chamber 11b of the right cooling chamber 11 and exits the right cooling chamber 11 via exit stub 27b.

Joined cooling chambers 11 of adjacent intake passages 4 are covered by lids 28 which are connected by a lid bridge 29 (Fig. 7).

Fig. 8 and Fig. 9 show an embodiment of the invention with the cooling fin arrangement 8 designed as a grid 30 in the first section 17a of the first flank 17 of the cooling fins 9. The grid 30 is formed by the first group 15 of cooling fins 9 and a second group 16 of cooling fins 9, wherein the second group 16 of cooling fins 9 is arranged in a right angle to the first group 15 of cooling fins 9. The first group 15 and the second group 16 of cooling fins 9 form a lattice of rectangular flow channels 31 which are flowed through by the charged air.

## Claims

1. An air intake tract arrangement (2) for an internal combustion engine with at least one intake passage (4) and at least one charge air cooler (5), wherein the charge air cooler (5) comprises a cooling fin arrangement (8) with at least one cooling fin (9) extending at least partly into the intake passage (4), **characterised in that** the charge air cooler (5) comprises at least one cooler casing (10) surrounding a cooling chamber (11), said cooling chamber (11) being separated from the intake passage (4) by a wall section (12), and the cooling fin arrangement (8) comprises a first region (13) extending into the intake passage (4) and a second region (14) extending into the cooling chamber (11), wherein the cooling fin arrangement (8) passes through the wall section (12).

2. The air intake tract arrangement (2) according to claim 1, **characterised in that** the charge air cooler (5), at least partly, consists of plastic material, wherein preferably the casing (10) of the charge air cooler (5) is made of plastic material.

3. The air intake tract arrangement (2) according to claim 1 or 2, **characterised in that** the wall section (12) is configured at least partly by the cooler casing (10).

4. The air intake tract arrangement (2) according to one of the claims 1 to 3, **characterised in that** the cooling fin arrangement (8) comprises a first group of blade shaped cooling fins (9) being arranged - preferably at least partially - parallel to the air flow direction in the intake passage (4) and spaced apart from one another by gaps (20a).

5. The air intake tract arrangement (2) according to claim 4, **characterised in that** at least one cooling fin (9) is angular having a first flank (17) being arranged in the first region (13) of the cooling fin arrangement (8) and a second flank (18) being arranged in the second region (14) of the cooling fin arrangement (8).

6. The air intake tract arrangement (2) according to claim 5, **characterised in that** at least one second flank (18), preferably each second flank (18), comprises at least one orifice.

7. The air intake tract arrangement (2) according to claim 5 or 6, **characterised in that** at least two cooling fins (9) comprise first flanks (17a) with different flank lengths (L1, L2) in air flow direction of the intake passage (4).

8. The air intake tract arrangement (2) according to claim 5 or 6, **characterised in that** at least one cooling fin (9) comprises a first flank (17) with an end region (22) being shaped in the form of an arch.

9. The air intake tract arrangement (2) according to one of the claims 5 to 8, **characterised in that** at least one cooling fin (9) comprises a first flank (17) with a first section (17a) and a second section (17b), wherein the first section (17a) is arranged in the intake passage (4), and wherein the second section (17b) is extending into an intake duct (6) of a cylinder head (1), the intake duct (6) being arranged downstream of the intake passage (4).

10. The air intake tract arrangement (2) according to one of the claims 1 or 9, **characterised in that** the intake passage (4) is formed by an intake manifold (3), wherein preferably the intake manifold (3) consists of plastic material.

11. The air intake tract arrangement (2) according to one of the claims 1 or 10, **characterised in that** the cooling fin arrangement (8) at least partly is designed as a grid (30), preferably in the first section (17a) of the first flank (17).

12. The air intake tract arrangement (2) according to claim 11, **characterised in that** the grid (30) comprises a second group (16) of cooling fins (9) forming a right angle to the first group (15) of cooling fins (9), wherein a lattice of preferably rectangular flow channels (31) is shaped by cooling fins (9) of the first group (15) and second group (16) of cooling fins (9).

13. The air intake tract arrangement (2) according to one of the claims 1 or 12, **characterised in that** at least two cooling chambers (11) of adjacent intake passages (4) are flow connected by at least one fluid passage (16a; 16b), preferably by two cooling fluid passages (16a, 16b), wherein preferably the fluid passages (16a, 16b) are shaped by a casing bridge (24) of the cooler casing (10).

14. The air intake tract arrangement (2) according to one of the claims 1 or 13, **characterised in that** the cooler casing (10) of at least one cooling chamber (11) is covered by a lid (28), wherein preferably the lids (18) of at least two adjacent cooling chambers (11) are joined by a lid bridge (29).
